# EUROPEAN PATENT SPECIFICATION

(11) **EP 1 232 035 B1**
(45) Date of publication and mention of the grant of the patent: **13.10.2004**
(21) Application number: 00981043.3
(22) Date of filing: 01.11.2000
(51) Int. Cl.: B23D 23/00, B23P 17/06

(54) **PRODUCTION OF FIBRES FOR USE AS REINFORCING IN CONCRETE**
VERFAHREN UND VORRICHTUNG ZUR HERSTELLUNG VON STAHLFASERN ALS ARMIERUNG FÜR BETON
PRODUCTION DE FIBRES DESTINEES A ETRE UTILISEES COMME ARMATURE DANS DU BETON

(30) Priority: 02.11.1999 ZA 9906853; 17.02.2000 ZA 200000749
(43) Date of publication of application: 21.08.2002
(73) Proprietor: Hourahane, Donald Henry, Horizon Park, Gauteng Province 1730 (ZA)
(72) Inventor: HOURAHANE, Donald, Henry, 1730 Horizon Park (ZA)
(74) Representative: Orr, William McLean
(86) International application number: PCT/ZA2000/000207
(87) International publication number: WO 2001/032341

(56) References cited:
- EP-A- 0 864 395
- DE-A- 3 117 200

## Description

### FIELD OF THE INVENTION

THIS INVENTION relates to a method and an apparatus for the production of fibres for use as reinforcing in concrete.

### BACKGROUND TO THE INVENTION

It is well known to disperse fibres of synthetic plastics material in concrete to act as reinforcing. Conventionally a strand (which can also be referred to as a filament) is spun or otherwise produced and is wound onto a reel or stored in a creel. Many hundreds of metres of strand are wound onto a reel or stored in a creel. To use the strand as reinforcing it has to be cut into fibres of short length. Typically the fibres have lengths which are between 20 and 60mm.

Cutting the strand is a problem as it has a thickness of only about 10 to 40 microns. Blades operating in the way that scissor blades do will not cut the strand successfully. Most times the strand merely bends and passes between the blades. The strand can be chopped using sharp blades but the blades must be sharp and cutting efficiency drops as the blades become blunt.

In the specification of my PCT application PCT/US97/00362 (published as WO97/26395) there is described a yarn which includes a core and a multitude of staple fibres forming a layer which envelopes the core and provides an extended surface area and interstical spaces for infiltration by cement fines and hydrates, the staple fibres being spun around the core and having sufficient freedom of radial movement to provide said spaces and permit ingress of cement fines and the formation of its hydrates in said spaces. Such a yarn is known as a friction spun yarn.

A specific feature of the friction spun yam of PCT/US97/00362 is that the fibres are attached to the core at intervals along the length of the core. This inhibits delamination, that is, sliding of the core with respect to the fibres. The specification of my PCT application is hereby incorporated into the present specification.

As is explained in the PCT specification, a cementitious mix bonds to a yarn of the type described above.

If fibres are used which are coated with inorganic additives, in the way that the fibres disclosed in PCT publication WO97/26395 can be, then attempts to chop using sharp blades are not successful as the blades wear too fast.

Another difficulty with current practices is that the fibres must be dispersed in the concrete mix in a predetermined ratio with respect to the concrete. Too little fibre will not have the requisite reinforcing effect. If too much fibre is used the cost of the reinforced article is excessive, the fibre being the most expensive component in the mix.

The art has for some applications not progressed beyond simply weighing the pre-cut fibres in a bucket and tipping the weighed mass of fibres into the concrete mix. It is also possible to purchase pre-weighed bags of fibre. The bags are of a material such as paper which disintegrates readily upon becoming wet in the mix thereby releasing the fibres. Both these procedures can result in a "bird's-nest" of interwoven fibres which do not, despite mixing of the cement in a mechanical mixer, separate fully, but remain as a clump in the mix. The aggregate in a mixer is relied upon to mill the concrete mix. It is not, however, effective insofar as fibre masses are concerned.

The present invention seeks to improve the known methods of manufacturing synthetic plastics material fibres for use as reinforcing in a cementitious mix.

### BRIEF DESCRIPTION OF THE INVENTION

According to one aspect of the present invention there is provided a method of producing a fibre for use as reinforcing in a cementitious mix which method comprises weakening and flattening a strand at a zone spaced from the strand's end by applying heat and pressure, and pulling on the strand to break it at said flattened and weakened zone and produce a fibre with flattened end portions.

The method can comprise advancing the strand continuously, weakening the strand at a succession of spaced zones, and pulling on the strand to break-off a succession of fibres.

The method may include the further step of winding the weakened and flattened strand and subsequently unwinding the weakened and flattened strand before pulling on the unwound, weakened and flattened strand to break it at said zones thereby to produce a plurality of fibres.

The weakened and flattened strand can be fed through a cementitious mix to coat the strand with the mix before breaking the strand into fibres.

In one form of the method said strand is weakened and flattened by passing it between an anvil and an ultrasonic horn. In this form the method can include the step of rotating a drum which has a plurality of anvils thereon so that the anvils move in succession past said horn, and passing the strand between the anvils and the horn to weaken and flatten the strand at said plurality of zones.

In another form of the invention said strand is weakened and flattened by passing it between two elements which heat said strand and also apply pressure to the strand to thin it. In this form the method can include the step of rotating a drum which has a plurality of anvils on its periphery so that the anvils move past a fixed shoe, and feeding the strand between the shoe and the drum so that each anvil grips the strand between itself and the shoe as it moves past the shoe, the strand being heated and compressed by the shoe and the anvils to weaken and flatten the strand at said plurality of zones.

The fibres can be fed into a cementitious mix as they are broken off.

According to a further aspect of the present invention there is provided apparatus for producing a fibre for use as reinforcing in a cementitious mix which comprises means for drawing a strand from a supply, means for applying heat and pressure to the strand at a zone spaced from the strand's free end to weaken and flatten it, and means for pulling on the said strand to break it at said zone and produce a fibre.

One form of the apparatus includes a rotatable drum with a plurality of anvils on its periphery, heating means past which said anvils move as said drum rotates, means for feeding said strand between said anvils and said heating means so that the strand is heated, and means for pulling the heated strand away by said feeding means at a speed faster than it is fed forward by said feeding means.

The apparatus can include a vessel for containing cementitious mix and guide means for guiding said strand through said vessel before it reaches said means for pulling on the strand.

### BRIEF DESCRIPTION OF THE DRAWINGS

For a better understanding of the present invention, and to show how the same may be carried into effect, reference will now be made, by way of example, to the accompanying drawings in which;
Figure 1 diagrammatically illustrates apparatus for severing a strand into short fibres using heat and pressure;
Figure 2 diagrammatically illustrates apparatus for severing a strand into short fibres using an ultrasonic horn; and
Figure 3 diagrammatically illustrates a plant for producing moulded articles.

### DETAILED DESCRIPTION OF THE DRAWINGS

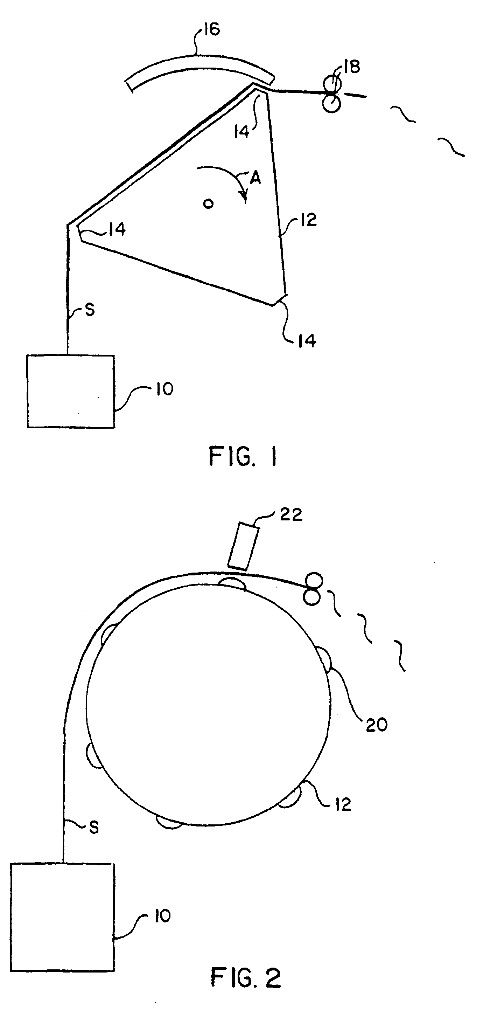

In Figure 1 of the drawing reference numeral 10 designates a reel or creel on which or in which, there is a strand S which, depending on reel or creel size and strand thickness, can be many hundreds or even many thousands of metres long.

A drum 12 having a plurality of lobes 14 running along the length thereof, and circumferentially spaced from one another around the drum, is driven in the direction indicated by arrow A. An arcuate heated shoe 16 is positioned adjacent the drum 12, there a being minimal gap between the surface of the shoe 16 and each lobe 14 as it moves past the shoe. The shoe 16 is heated by means of an electrical heating element. In addition to heating the strand the effect is to thin the strand at the zone of the strand which is between the shoe 16 and the lobe 14.

The lobes 14 form anvils which grip the strand between themselves and the shoe 16.

A pair of rollers 18 is provided immediately adjacent the drum 12 and shoe 16. The position of the rollers 18 is such that the leading end of the strand, as it emerges from between the shoe 16 and one of the lobes 14, enters the nip between the rollers 18. The linear speed of the peripheries of the rollers 18 is greater than the linear speed at the periphery of the drum 12, and the spacial arrangement is such that the leading end of the strand enters the nip just before the lobe and the shoe move out of co-operating relationship to free the strand. The pull exerted by the rollers 18 on the strand breaks it at the zone where it has been weakened by being thinned and heated. The strand remains hot, and hence soft, for a short period of time after passing between the shoe and lobe and is vulnerable to breaking during this period of time by a pull exerted by the rollers 18. Hence each time a lobe and the shoe thin and heat the strand, the rollers 18 rip a fibre of the requisite length off the end of the strand. Both ends of each fibre are slightly flattened.

Whilst the fibres can be stored for later weighing and addition to a concrete mix, this can lead to the "bird-nesting" problem discussed above. It is preferred, therefore, that the fibres be fed directly into the concrete mix as they emerge from between the rollers 18. In a practical form the apparatus includes a plurality of reels or creels 10 each feeding a strand to the drum 12. By running the drum and rollers for a predetermined period of time a stream of discrete fibres enters the mix and cannot become intertwined. The time for which the apparatus runs determines the mass of the fibres that have been broken off and thrown into the concrete mix. The apparatus can therefore be mounted directly onto a mobile cement mixer and the fibres broken off and dispersed into the mix on the way to the building site. A simple programmable controller with a read out of weight or fibre count can be used to preset the running time of the drum.

The spacing of the lobes determines fibre length. Fibres of different length can be obtained by using drums with lobes that are differently spaced to those illustrated.

In Figure 2 the drum 12 has a plurality of strip like anvils 20 which extend in the direction of the length of the drum. An ultrasonic horn 22 is provided adjacent the periphery of the drum, there being minimal clearance between the anvils and the horn. In the gap between the horn and that one of the anvils that is passing it, the molecular structure of the strand is vibrated at a frequency such that the strand heats up and is thus softened and weakened. More specifically, the ultrasonic horn can operate at a frequency of, for example, 20000Hz. The horn changes shape when power is applied to it contracting and expanding in the longitudinal and transverse directions. Simply by way of example the horn can have a width of 20mm as shown by dimension B in Figure 2. The anvil 20 can have a width of 1mm in the same direction. If the linear speed of the strand is 500 metres per minute, which is 8.33m per second, then each portion of the strand which is between an anvil 20 and the hom 22 will be there for 0.002 seconds. During this time 40 cycles occur at the horn, and this results in 40 "hammer blows" on the strand. As the strand cannot conduct the resulting heat away, localized heating over approximately 1 mm of strand occurs. This destroys the linear orientation of the polymeric chain. Experimental work has shown that a polyester strand which required a 15kg pull to break it before it passed between the horn and anvil will break if subjected to a pull of 1kg.

The form of apparatus described with reference to Figure 1 of the drawing can be used with any strand which will soften and flatten under heat and pressure. For strands such as glass and carbon fibre the weakened zones can be created by subjecting the strands to the effects of an ultrasonic horn, as shown in Figure 2, or pulling them around an edge which bends the strand so far that it is over-stressed and fractured. For example, the strand can be passed between toothed wheels. If the strand of glass or carbon fibre has a polymer coating, then breaking of the strand to produce a fibre requires a second stage during which the strand is heated, and the polymer thus softened, at the zone where the glass or carbon fibre has been broken, before the short fibre length is pulled off.

Two or more strands can be bonded together during the heating and softening procedure by causing the strands to be in contact where heating and softening takes place. Double fibres of this type enhance bonding. If the fibres are additionally given a false twist, the twist tends to force the strands apart in the mix thereby forming loops and enhancing bonding.

The strand described in the specification of PCT publication WO97/26395 is particularly suitable for use as concrete reinforcing fibres. The preferred method of welding the core and staple fibres at intervals as described in the published specification is to use an ultrasonic horn and a drum with lobes as described above. By pulling on the end of the strand it is possible to bond the sheath to the core and break-off the length of fibre required in a single operation.

Sources of heat in addition to heated shoes and ultrasonic horns are hot air guns, electrically heated wires, electrically heated tapes and lasers. If a strand is fed transversely to the strands being fed around the drum, and welded thereto, fibres having a T-shape or an I-shape can be produced.

The fibres produced as described above can also be used for reinforcing the material emerging from the nozzle of a shotcreting machine. There are limitations to the lengths of the fibres that can be used in a machine of this type when the fibres must pass through the feed hose. By adding the fibres in the vicinity of the nozzle, longer fibres can be used than was previously possible.

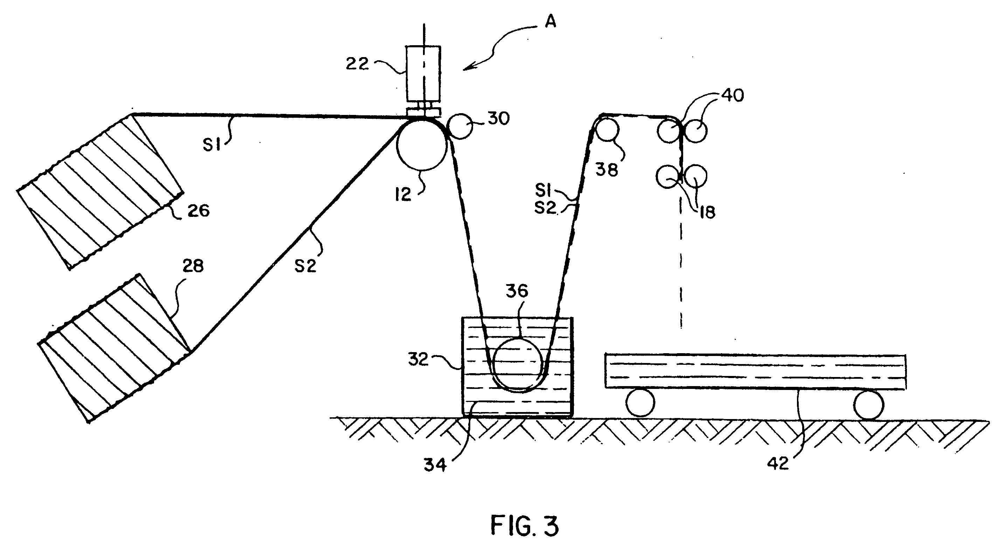

The plant 24 illustrated in Figure 3 comprises a pair of creels 26, 28 from which two strands S1 and S2 are unwound and fed to apparatus which can be of the general form shown in Figure 1 or in Figure 2. Purely for illustrative purposes the apparatus is shown as including a horn designated 22 and a drum designated 12. In this form a roller 30 pressed against the drum 12 assists in pulling the strands, without breaking either of them, off the creels and over the drum 12. Downstream of the roller 30 the strands S1, S2 are shown as having thick parts and thin parts.

A bath 32 contains cementitious mix 34, there being a roller 36 immersed in the mix 34. The strands are coated as they enter the bath 32, pass under the roller 36 and emerge from the top surface of the mix in the bath. In another form the strands exit through holes in the bath wall. By varying the hole size control can be exercised over the amount of mix carried out of the bath by the strands.

A single roller 38 and a pair of nip rollers 40 guide the strands to the two rollers 18 which, in this form of the apparatus, are some distance from the drum 12 instead of being immediately adjacent it. The resultant fibres fall into a mould 42.

The fibres can pick-up enough cementitious mix to make it unnecessary to add further mix to the mould. Alternatively cementitious mix can be fed to the mould as the fibres drop in.

By moving the mould to different positions, the lay-up pattern of the fibres in the mould can be varied. Some fibres can lay at 90°, or at 60° or both, to other fibres. For example, by rotating and reciprocating the mould fibres can be arranged at all angles with respect to one another. By moving the mould in rectilinear to and fro movements in directions at right angles to one another, fibres can be arranged at 90° with respect to one another. In another form there can be two or three fibre supplies which are differently orientated to achieve the requisite pattern of fibres in the mould.

Fibres can be dispersed in the coating mix in the bath 32 so that they are picked-up on the strands S1, S2 with the coating mix.

By counting the fibres into the mould a very accurate volume fraction of fibres is achieved and this can be fifty times higher than the volume fraction obtainable by mixing. The product toughness and strength is dependant on the volume fraction and the type of strand used. Bleed points in the mould allow excess mix to be exuded. Usually only one face of a finished moulding can be seen. Cementitious mix can be sprayed onto this face to form a coating so that the moulding is free of surface defects.

It is also possible to wind the strand immediately after weakening and before coating. The strand is shipped to the end user in wound form. The end user then feeds the weakened strand through a coating bath and thereafter breaks it into fibres. Thus a winding apparatus is provided immediately after the roller 30. At the end user's facility, immediately prior to the bath 32, there is a stand by which the wound strand can be carried. As the pre-weakened strand is unwound it is fed directly to the coating bath 32 and then to the rollers 18 to break it into fibres.

The strands described thus far are flexible and soft and their general characteristics are such that they could be used in weaving and knitting processes to produce fabrics. The method and apparatus of the invention can, however, be applied to rigid materials, and in particular to rigid materials which are sheathed in a synthetic plastics material so that they have a rigid core and a sheath of material which softens when heated. The rigid materials can be glass, carbon or graphite.

Insofar as such sheathed materials are concerned, the ultrasonic horn can be such that its effect is twofold. It shatters the rigid core at the zone to which vibrations are applied and flattens the sheath at the same zone. The sheath thus becomes thin and spread out. The pieces of shattered core remain buried in the sheath. When the strand is pulled by the rollers 18, the strand breaks across the flattened zone. Each fibre thus has flattened ends, the ends having the form of fish tails.

It will be understood that strands which are rigid cannot be wound. Hence the production of the rigid strand, its sheathing if necessary in a synthetic plastics material, its passage past the hom and the breaking-off of the fibres must all take place on in-line apparatus.

If the strand is of a part treated nature, that is, it is in its Beta stage, then it is usually pliable and can be wound for transport and storage. After unwinding it must be heat treated so that it is cured and becomes rigid. Heat treating can be before or after it is broken into fibres and the heat generated during application of the ultrasonic vibration is sufficient to advance curing. Further heat, such as the exothermic heat of setting concrete, can finalize..

The strand of WO97/26395, if made using a rigid core and a sheathing of staple fibres, is particularly suitable, once it has been broken into fibres, for use in reinforcing concrete.

## Claims

1. A method of producing a fibre for use as reinforcing in a cementitious mix which method comprises weakening and flattening a strand (S) at a zone spaced from the strand's end by applying heat and pressure, and pulling on the strand (S) to break it at said flattened and weakened zone and produce a fibre with flattened end portions.

2. A method as claimed in claim 1 and comprising advancing the strand (S) continuously, weakening the strand at a succession of spaced zones, and pulling on the strand (S) to break-off a succession of fibres.

3. A method as claimed in claim 1, and comprising the step of winding the weakened and flattened strand and subsequently unwinding the weakened and flattened strand before pulling on the unwound, weakened and flattened strand to break it at said zones thereby to produce a plurality of fibres.

4. A method as claimed in any preceding claim and comprising passing the weakened and flattened strand through a cementitious mix (34) to coat the strand with the mix before breaking the strand into fibres.

5. A method as claimed in any preceding claim, wherein said strand is weakened and flattened by passing it between an anvil (20) and an ultrasonic horn (22).

6. A method as claimed in claim 5 and including the step of rotating a drum (12) which has a plurality of anvils (20) thereon so that the anvils (20) move in succession past said horn (22), and passing the strand between the anvils (20) and the horn (22) to weaken and flatten the strand at said plurality of zones.

7. A method as claimed in any one of claims 1 to 4, wherein said strand (S) is weakened and flattened by passing it between two elements (14, 16) which heat said strand and also apply pressure to the strand to thin it.

8. A method as claimed in claim 7, and including the step of rotating a drum (12) which has a plurality of anvils (14) on its periphery so that the anvils (14), move past a fixed shoe (16), and feeding the strand (S) between the shoe (16) and the drum (12) so that each anvil (14) grips the strand between itself and the shoe (16) as it moves past the shoe (16), the strand being heated and compressed by the shoe (16) and the anvils (14) to weaken and flatten the strand at said plurality of zones.

9. A method as claimed in any preceding claim, and including the step of feeding the fibres into a cementitious mix as they are broken off.

10. Apparatus for producing a fibre for use as reinforcing in a cementitious mix which comprises means (12,30) for drawing a strand from a supply (26, 28), means (16, 22) for applying heat and pressure to the strand at a zone (14) spaced from the strand's free end to weaken and flatten it, and means (18) for pulling on the said strand to break it at said zone and produce a fibre.

11. Apparatus as claimed in claim 10, and including a rotatable drum (12) with a plurality of anvils (20) on its periphery, heating means (22) past which said anvils move as said drum rotates, means for feeding said strand between said anvils and said heating means so that the strand is heated, and means (18) for pulling the heated strand away at a speed faster than it is fed forward by said feeding means.

12. Apparatus as claimed in claim 10 or 11, wherein said heating means is an ultrasonic horn (22).

13. Apparatus as claimed in claim 10, 11 or 12, and including a vessel (32) for containing cementitious mix (34) and guide means (36) for guiding said strand through said vessel before it reaches said means (18) for pulling on the strand.

## Patentansprüche

1. Verfahren zum Erzeugen einer Faser zur Verwendung als Verstärkung in einer zementartigen Mischung, welches Verfahren es aufweist, einen Strang (S) in einer Zone, die vom Ende des Strangs beabstandet ist, zu schwächen und zu verflachen, indem Wärme und Druck angewendet werden, und am Strang (S) zu ziehen, um ihn in der verflachten und geschwächten Zone zu zerreißen und eine Faser mit verflachten Endbereichen zu erzeugen.

2. Verfahren nach Anspruch 1, und das aufweist, den Strang (S) kontinuierlich vorzubewegen, den Strang in einer Folge von beabstandeten Zonen zu schwächen und am Strang (S) zu ziehen, um eine Folge von Fasern abzureißen.

3. Verfahren nach Anspruch 1, und das die Schritte aufweist, den geschwächten und verflachten Strang aufzuwickeln und anschließend den geschwächten und verflachten Strang abzuwickeln, bevor am abgewickelten, geschwächten und verflachten Strang gezogen wird, um ihn an den Zonen zu zerreißen, um dadurch eine Mehrzahl von Fasern zu erzeugen.

4. Verfahren nach einem vorangehenden Anspruch, und das aufweist, den geschwächten und verflachten Strang durch eine zementartige Mischung (34) hindurchzuleiten, um den Strang mit der Mischung zu überziehen, bevor der Strang in Fasern zerrissen wird.

5. Verfahren nach einem vorangehenden Anspruch, bei dem der Strang dadurch geschwächt und verflacht wird, indem er zwischen einem Amboss (20) und einem Ultraschallhorn (22) hindurchgeleitet wird.

6. Verfahren nach Anspruch 5, und das den Schritt aufweist, eine Trommel (12) zu drehen, die eine Mehrzahl von Ambossen (20) auf sich aufweist, so dass sich die Ambosse (20) in Folge an dem Horn (22) vorbeibewegen, und den Strang zwischen den Ambossen (20) und dem Horn (22) hindurchzuleiten, um den Strang an der Mehrzahl von Zonen zu schwächen und zu verflachen.

7. Verfahren nach einem der Ansprüche 1 bis 4, bei dem der Strang (S) dadurch geschwächt und verflacht wird, dass er zwischen zwei Elementen (14, 16) hindurchgeleitet wird, die den Strang erwärmen und auch Druck auf den Strang ausüben, um ihn dünner zu machen.

8. Verfahren nach Anspruch 7, und das den Schritt einschließt, eine Trommel (12) zu drehen, die eine Mehrzahl von Ambossen (14) an ihrem Umfang aufweist, so dass sich die Ambosse (14) an einem festen Schuh (16) vorbeibewegen, und den Strang (S) zwischen dem Schuh (16) und der Trommel (12) zuzuführen, so dass jeder Amboss (14) den Strang zwischen sich selbst und dem Schuh (16) ergreift, während er sich am Schuh (16) vorbeibewegt, wobei der Strang durch den Schuh (16) und die Ambosse (14) erhitzt und zusammengedrückt wird, um den Strang an der Mehrzahl vom Zonen zu schwächen und zu verflachen.

9. Verfahren nach einem vorangehenden Anspruch, und das den Schritt aufweist, die Fasern in eine zementartige Mischung einzuspeisen, während sie abgerissen werden oder nachdem sie abgerissen sind.

10. Vorrichtung zum Erzeugen einer Faser zur Verwendung als Verstärkung in einer zementartigen Mischung, die Mittel (12, 30) zum Ziehen eines Strangs von einem Vorrat (26, 28), Mittel (16, 22) zum Anwenden von Wärme und Druck auf den Strang an einer Zone (14), die vom freien Ende des Strangs beabstandet ist, um ihn zu schwächen und zu verflachen, und Mittel (18) zum Ziehen an dem Strang aufweist, um ihn an der Zone zu zerreißen und eine Faser zu erzeugen.

11. Vorrichtung nach Anspruch 10, und die eine drehbare Trommel (12) mit einer Mehrzahl von Ambossen (20) an ihrem Umfang, Heizmittel (22), an denen sich die Ambosse vorbeibewegen, während sich die Trommel dreht, Mittel zum Zuführen des Strangs zwischen die Ambosse und die Heizmittel, so dass der Strang erwärmt wird, und Mittel (18) zum Wegziehen des erwärmten Strangs mit einer Geschwindigkeit einschließt, die schneller ist, als er durch die Zuführungsmittel in Vorwärtsrichtung zugeführt wird.

12. Vorrichtung nach Anspruch 10 oder 11, bei der die Heizmittel ein Ultraschallhorn (22) sind.

13. Vorrichtung nach Anspruch 10, 11 oder 12, und die ein Gefäß (32) zum Enthalten einer zementartigen Mischung (34) und Führungsmittel (36) einschließt, um den Strang durch das Gefäß zu führen, bevor er die Mittel (18) zum Ziehen am Strang erreicht.

## Revendications

1. Procédé pour produire une fibre destinée à être utilisée comme armature dans un mélange cimentaire, laquelle méthode comprend l'affaiblissement et l'aplatissement d'un faisceau fibreux (S) en une zone espacée de l'extrémité du faisceau fibreux en appliquant de la chaleur et une pression, et une traction sur le faisceau fibreux (S) afin de le casser au niveau de ladite zone aplatie et affaiblie et de produire une fibre avec les portions d'extrémité aplaties.

2. Procédé selon la revendication 1, comprenant le fait de faire avancer le faisceau fibreux (S) de façon continue, d'affaiblir le faisceau fibreux en une succession de zones espacées, et de tirer sur le faisceau fibreux (S) afin de détacher une succession de fibres.

3. Procédé selon la revendication 1, comprenant l'étape consistant à enrouler le faisceau fibreux affaibli et aplati et à dérouler ensuite le faisceau fibreux affaibli et aplati avant de tirer sur le faisceau fibreux affaibli, aplati et déroulé, afin de le casser au niveau desdites zones et de produire ainsi une pluralité de fibres.

4. Procédé selon l'une des revendications précédentes, comprenant le fait de faire passer le faisceau fibreux affaibli et aplati dans un mélange cimentaire (34) pour enduire le faisceau fibreux avec le mélange avant de casser le faisceau fibreux en fibres.

5. Procédé selon l'une des revendications précédentes, dans lequel ledit faisceau fibreux est affaibli et aplati par passage entre une enclume (20) et un émetteur ultrasonique (22).

6. Procédé selon la revendication 5 et comprenant l'étape consistant à entraîner en rotation un tambour (12) pourvu d'une pluralité d'enclumes (20) de telle sorte que les enclumes (20) se déplacent successivement devant l'émetteur (22), et à faire passer le faisceau fibreux entre les enclumes (20) et l'émetteur (22) pour affaiblir et aplatir le faisceau fibreux à ladite pluralité de zones.

7. Procédé selon l'une quelconque des revendications 1 à 4, dans lequel ledit faisceau fibreux (S) est affaibli et aplati par passage entre deux éléments (14, 16) qui chauffent ledit faisceau fibreux et appliquent également une pression sur le faisceau fibreux pour l'amincir.

8. Procédé selon la revendication 7, et incluant l'étape consistant à entraîner en rotation un tambour (12) pourvu d'une pluralité d'enclumes (14) sur sa périphérie de telle sorte que les enclumes (14) se déplacent devant un sabot fixe (16), et alimenter le faisceau fibreux (S) entre le sabot (16) et le tambour (12) de telle sorte que chaque enclume (14) saisisse le faisceau fibreux entre elle-même et le sabot (16) lorsqu'elle se déplace devant le sabot (16), le faisceau fibreux étant chauffé et comprimé par le sabot (16) et les enclumes (14) afin d'affaiblir et d'aplatir le faisceau fibreux à ladite pluralité de zones.

9. Procédé selon l'une quelconque des revendications précédentes, et comprenant l'étape consistant à alimenter les fibres dans un mélange cimentaire au moment où elles sont fractionnées.

10. Appareil pour produire une fibre destinée à être utilisée comme armature dans un mélange cimentaire, comprenant des moyens (12, 30) pour extraire un faisceau fibreux d'une réserve (26, 28), des moyens (16, 22) pour appliquer de la chaleur et une pression au faisceau fibreux en une zone (14) espacée de l'extrémité libre du faisceau fibreux afin de l'affaiblir et de l'aplatir, et des moyens de traction (18) pour tirer sur ledit faisceau fibreux afin de le casser au niveau de ladite zone et de produire une fibre.

11. Appareil selon la revendication 10, comprenant un tambour rotatif (12) pourvu d'une pluralité d'enclumes (20) sur sa périphérie, des moyens de chauffage (22) le long desquels lesdites enclumes se déplacent lorsque ledit tambour tourne, des moyens d'alimentation pour alimenter ledit faisceau fibreux entre lesdites enclumes et lesdits moyens de chauffage de telle sorte que le faisceau fibreux est chauffé, et des moyens de traction (18) pour tirer le faisceau fibreux chauffé en l'éloignant à une vitesse supérieure à sa vitesse d'alimentation par lesdits moyens d'alimentation.

12. Appareil selon la revendication 10 ou 11, dans lequel lesdits moyens de chauffage est un émetteur ultrasonique (22).

13. Appareil selon la revendication 10, 11 ou 12, comprenant un récipient (32) destiné à contenir le mélange cimentaire (34) et des moyens de guidage (36) pour guider ledit faisceau fibreux à travers ledit récipient avant qu'il atteigne lesdits moyens de traction (18) tirant sur le faisceau fibreux.
